# EUROPEAN PATENT APPLICATION

(11) **EP 0 891 717 A1**
(43) Date of publication of application: **20.01.1999**
(21) Application number: 98304421.5
(22) Date of filing: 04.06.1998
(51) Int. Cl.: A23K 1/14, A23K 3/00

(54) **Support for acids and salts**

(30) Priority: 20.06.1997 GB 9713112
(71) Applicant: VERDUGT B.V., NL-4006 WC Tiel (NL)
(72) Inventor: van Amersfoort, Jacob, 4000 AB Tiel (NL); van Ooijen, Johannes Adrianus Cornelis, 4000 AB Tiel (NL)
(74) Representative: Krishnan, Suryanarayana Kalyana

(57) **Abstract**

This invention relates to a support for carboxylic acid components of animal feeds said support comprising beet pulp. Beet pulp, unlike conventional supports such as silica, perlite, vermiculite etc, is readily digestible by the animal. Beet pulp is a a nutritionally beneficial and absorbent support which is not only naturally occurring but is also part of conventional animal feeds.

## Description

This invention relates to a support for acids and salts, especially for carboxylic acids and their salts, which are used as feed components in animal feeds.

It is well known that acids and salts are an important component of animal feeds due to their inherent fungicidal, bacteriocidal and other preservative properties. However, such acids and salts, especially the carboxylic acids and their salts when they are in the liquid form are not easy to distribute as such uniformly in an animal feed. They not only have the problem of wetting the feed thereby adversely affecting the free-flowing properties of the animal feed but they also have the ability to corrode the distribution and storage vessels and are a risk to the operatives handling such acids or salts.

In order to overcome these problems, the use of adsorbent solids of the desired particle size range has been suggested in US-A-3846567. According to this document, liquid acids are transformed into solid powders by adsorbing such acids on the surface of a highly dispersed solid substance of small particle size (less than 10 microns). Such solid substances may be selected from oxides, activated charcoal, perlite, plastic powders, bentonite, silica, alumina, silicates, aluminates or peat. Similarly, US-A-4199606 suggests the use of vermiculite and perlite carriers for propionic acid used as a preservative for various agricultural crop products and by-products thereof such as eg animal feeds and cereals. Again GB-A-1389588 suggests a free-flowing, powder form of an agent for preserving mixed feedstuffs and cereals, the agent comprising propionic acid and a highly dispersed synthetic silicon dioxide and/or silicate having a particle size of less than 500 mµ and a surface area of 100-500 m²/g. Also suggested in the prior art is the use of foamed and granular substances or synthetic resins for impregnation thereof with eg the acids. However, this raised more problems than it solved. For instance, such resins had detrimental effects on the digestive tract of the animal; it affected the quality of the meat from the animal fed in this manner because of the inevitable leaching of softeners, plasticizers etc from the synthetic resin; such resins adversely affected the pH value (highly acidic) in the digestive tract; the indigestibility of such resins and the consequent dispersal of the animal dung in which the resin granules were virtually impossible to decompose; and the lack of water absorbency of such resins when such dung is used as fertilizer. Some of these problems were overcome by the method described in US-A-4310552 which suggests impregnating indigestible but naturally occurring supports such as expanded perlite or vermiculite with various animal feed components and then mixing/blending such impregnated supports with conventional animal feeds. It is possible to visualise the use of such indigestible, naturally occurring supports for impregnation thereof with carboxylic acids. Whilst this overcomes the problems of handling free/liquid acids, it adds to the cost of the animal feed and at the same time has the disadvantage that the support itself has no nutrient value to the animals fed. Also, such supports have the disadvantage due to their high porosity of being highly water adsorbent thereby increasing the demand on the water fed to the animals. Thus, the use of such indigestible supports result in the increase in the volume of the animal feed and the amounts consumed by the animals without having any particular nutritionally beneficial effect.

It has now been found that such problems may be mitigated by using a nutritionally beneficial and absorbent support which is not only naturally occurring but is also part of conventional animal feeds.

Accordingly, the present invention is a support for carboxylic acid components of animal feeds said support comprising beet pulp.

Beet pulp is a conventional and regular animal feed component. The commonest source of beet pulp is as a by-product of the beet sugar industry and is a relatively inexpensive material costing about £0.08/kg. However, beet pulp has never been used as a support for carboxylic acids and/or salts, especially when they are in liquid form either as such or as solutions thereof for use in animal feeds. Beet pulp is capable of absorbing organic acids and/or salts which are liquids as such or solutions thereof in a solvent to form a free-flowing product.

Beet pulp can be impregnated with the carboxylic acids, salts of carboxylic acids (whether partially or fully neutralised), or solutions of such acids and salts used as preservatives in animal feeds. Beet pulp may be impregnated with the carboxylic acid/salts or solutions thereof eg by spraying the acid itself, when in liquid form, or an aqueous or alcoholic solution thereof or a salt thereof on the beet pulp support. The acid and/or salt is absorbed slowly and may take from 1-30 minutes depending upon the viscosity of the acid and/or salt solution used.

Specific examples of such acids include at least one acid and/or salt of a C1 to C12 carboxylic acid, which may be saturated or unsaturated, straight or branched chain and has at least one carboxyl group, especially selected from formic acid, propionic acid and salts thereof. Where salts of the carboxylic acids are used these are suitably ammonium, sodium and potassium salts.

The amount of acid and/or salt that can be incorporated in the beet pulp is suitably in the range from 1-75% by weight, preferably from 5-70% by weight based on the total weight of the beet pulp and the acid/salt. In other words, the amount of beet pulp on which the carboxylic acid or salt thereof is supported is suitably in the range from 30% to 99% by weight based on the total weight of the support and the acid and/or salt.

Laboratory tests have shown that a mixture containing 70% by weight of beet pulp and 30% by weight of propionic acid can still produce a free-flowing product. Equally free-flowing is a mixture of 50% by weight beet pulp and 50% by weight formic acid (as an 85% w/w aqueous solution). These mixtures can be used in a manner similar to any other organic acid or salt on a carrier/support for the preservation or for fungicidal/bactericidal protection of animal feeds. Examples of two typical animal feed formulations which contain beet pulp are shown below:

| | **1** | **2** |
|---|---|---|
| Ground nut residue | 80 | - |
| Dried beet pulp | 50 | 25 |
| Coconut slivers | 100 | - |
| Maize & gluten germ meal | 141 | - |
| Rapeseed residue | 33 | 350 |
| Lupins | - | 50 |
| Citrus pulp | 266 | 284 |
| Palm slivers | 200 | 150 |
| Linseed | 50 | 30 |
| Molasses | 30 | 50 |
| Molasses residue | 20 | 20 |
| Limestone | 2 | 5 |
| Salt | 8 | 8 |
| Fat | - | 7 |
| Vitamin Premix No.11 | 5 | 5 |
| | 1000Kg | 1000Kg |

| Vitamin Premix No.11 Content/Kg | | |
|---|---|---|
| Vitamin A (international units/Kg) | 5000 | 5000 |
| Vitamin D3 (international units/Kg) | 1000 | 1000 |
| Crude protein | 176g | 158g |
| Digestible protein | 135g | 120g |
| Crude fat | 62g | 120g |
| Crude fibre | 126g | 108g |
| Ash | 76g | 81g |
| water | 97g | 106g |
| Calcium | 7.6g | 9g |
| Phosphorous | 4.5g | 5g |
| Sodium | 4g | 4g |
| Energy Value (mJ/Kg) | 11.1 | 10.7 |

Beet pulp has nutritional value and is a normal animal feed component when compared with other conventional carriers/supports such as eg perlite, vermiculite and dried clays. Beet pulp has inherent nutritional value when compared with conventional carriers/supports. Beet pulp is very cost effective when compared with conventional carriers/supports. Beet pulp does not result in animal excreta in which the carrier support is not naturally decomposable or does not easily spread when used in fertilizers. Beet pulp is more economical when compared with conventional carriers.

## Claims

1. A support for carboxylic acid components of animal feeds said support comprising beet pulp.

2. A support for carboxylic acid components of animal feeds according to Claim 1 wherein the beet pulp is a by-product of the beet sugar industry.

3. A support for carboxylic acid components of animal feeds according to Claim 1 or 2 wherein the beet pulp is capable of absorbing organic acids/salts which are liquids as such or solutions thereof in a solvent to form a free-flowing product.

4. A support for carboxylic acid components of animal feeds according to any one of the preceding Claims wherein the beet pulp is impregnated with the carboxylic acids, salts of carboxylic acids (whether partially or fully neutralised), or solutions of such acids and/or salts.

5. A support according to any one of the preceding Claims wherein the beet pulp is impregnated with the carboxylic acid and/or salts or solutions thereof by spraying the acid itself, when in liquid form, or an aqueous or alcoholic solution thereof or a salt thereof on the beet pulp support.

6. A support according to any one of the preceding Claims wherein the carboxylic acid is at least one carboxylic acid selected from C1 to C12 carboxylic acids, which may be saturated or unsaturated, straight or branched chain and has at least one carboxyl group, or a salt of said carboxylic acid(s).

7. A support according to Claim 6 wherein the carboxylic acid or a salt thereof is selected from formic acid, propionic acid and salts thereof.

8. A support according to any one of the preceding Claims wherein the carboxylic salt is an ammonium, sodium or potassium salt.

9. A support according to any one of the preceding Claims wherein the amount of acid and/or salt that can be incorporated in the beet pulp is in the range from 1-75% by weight, preferably from 5-70% by weight based on the total weight of the beet pulp and the acid and/or salt.

10. An animal feedstuff comprising a carboxylic acid and/or a salt thereof supported on beet pulp so as to produce a free-flowing product characterised in that the mixture of acid and beet pulp comprises 70% by weight of beet pulp and 30% by weight of propionic acid.

11. An animal feedstuff comprising a carboxylic acid and/or a salt thereof supported on beet pulp so as to produce a free-flowing product characterised in that the mixture of acid and beet pulp comprises 50% by weight beet pulp and 50% by weight formic acid (as an 85% w/w aqueous solution).
